**Europäisches Patentamt**

**European Patent Office**

**Office européen des brevets**

(19)

(11) Veröffentlichungsnummer: **0 128 396
B1**

(12) # EUROPÄISCHE PATENTSCHRIFT

(45) Veröffentlichungstag der Patentschrift:
**26.10.88**

(51) Int. Cl.⁴: **G 06 F 13/40**, G 06 F 13/42

(21) Anmeldenummer: **84105695.5**

(22) Anmeldetag: **18.05.84**

(54) Integriertes, busorientiertes Übertragungssystem.

(30) Priorität: **01.06.83 DE 3319980**

(43) Veröffentlichungstag der Anmeldung:
**19.12.84 Patentblatt 84/51**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**WO - A - 82/01607
DE - A - 3 133 579
DE - A - 3 228 013
GB - A - 2 061 574**

**IBM TECHNICAL DISCLOSURE BULLETIN, Band 18, Nr.
6, November 1975, Seiten 1871-1872, New York, USA;
J.C. HSIEH: "Data buss precharge"**

(73) Patentinhaber: **Siemens Aktiengesellschaft Berlin und
München, Wittelsbacherplatz 2, D-8000 München 2 (DE)**

(72) Erfinder: **Geiger, Gerhard, Dipl.-Ing.,
Hohenwaldeckstrasse 7, D-8162 Schliersee (DE)**
Erfinder: **Strafner, Michael, Dipl.-Ing., St.
Cajetan-Strasse 14, D-8000 München 80 (DE)**

**Beschreibung**

Die Erfindung betrifft ein monolithisch integrierbares Übertragungssystem für Binärinformation, bestehend aus mindestens einer Adressquelle, die über einen Adressbus mit mindestens einer Adresssenke verbunden ist, aus mindestens einer, jeweils einer Adresssenke zugeordneten, über jeweils eine Auswahlleitung aktivierbaren und mit einem Datenbus verbundenen Sende/Empfangseinrichtung, aus einem Taktgenerator zum Erzeugen von zwei phasenverschobenen, nicht überlappenden Taktsignalen, wobei im Verlauf eines ersten Taktsignals eine erste Vorladeeinrichtung zum Vorladen des Datenbusses angesteuert ist, und wobei die Sende/Empfangseinrichtung im Verlauf eines zweiten Taktsignals adressiert ist.

Beim Aufbau von Datenverarbeitungsanlagen ist es bekannt, busorientierte Übertragungssysteme vorzusehen, die einen Adressbus und einen Datenbus aufweisen. Eine erste Busstruktur ist dabei beispielsweise durch einen zentralen Adressbus charakterisiert, welcher mit mehreren dezentralen Dekodern zum Auswählen einer Sende/Empfangseinrichtung verbunden ist. Eine andere typische Systemstruktur weist einen zentralen Adressdekoder auf, von welchem Steuerleitungen sternförmig zu mehreren Sende/Empfangseinheiten hinführen.

Abhängig von ihrer Länge sind alle Signalleitungen des Übertragungssystems mit einem unerwünschten Einschwingverhalten beim Anlegen von Signalen behaftet. Um sicherzustellen, dass beim Anlegen von Adress- und Datensignalen alle Einschwingvorgänge beendet sind, erfordert das Ausgeben und Empfangen von Signalen eine streng synchrone Taktung.

Ein stabiler Signalpegel kann in kurzer Zeit dadurch erreicht werden, dass die entsprechende Signalleitung mit einem hohen Pegel vorgeladen wird, der entsprechend dem Signalmuster gegebenenfalls in kurzer Zeit entladen werden kann. In einem Zweitaktsystem wird in einer ersten Taktphase der Datenbus vorgeladen, während die Adresse auf den Adressbus geschaltet wird. Die daraus dekodierten Steuersignale müssen bis zum Ende der ersten Phase stabil anliegen. In der zweiten Phase wird das Datenmuster auf den vorgeladenen Datenbus geschaltet, während der Adressbus stabil bleibt.

Aus der DE-A-3 133 579 ist eine Bus-Steuereinheit bekannt, die einen schnellen Datentransfer zwischen zwei internen Datenbussen und einem externen Bus ermöglicht. Über die Busse gleichen Typs werden uni-direktional oder bi-direktional Informationen ausgetauscht. Das System wird von einem starren 4-Phasen-Taktsystem gesteuert, wobei die internen Datenbusse in jeweils der ersten und dritten Taktphase vorgeladen und in der zweiten bzw. vierten Taktphase zum Ein- bzw. Auslesen von Daten mit entsprechenden Ein- bzw. Auslesesignalen adressiert werden, die mit Hilfe eines schnellen Eingangs-Treibers und einer Ausgangsschaltung mit einem Tri-State-Treiber und einem Schalttransistor erzeugt werden.

Um die Schaltgeschwindigkeit zu erhöhen, wird eine möglichst kurze Ent- bzw. Aufladezeit des Adressbusses angestrebt. Die dazu bei einem Adresswechsel zur Verfügung stehende Zeit ist für beide Vorgänge gleich, wobei jedoch in N-MOS-Technik ein Ladevorgang aus physikalischen Gründen eine längere Zeit in Anspruch nimmt, als ein Entladevorgang. Um den Zeitunterschied auszugleichen, muss ein Aufladetransistor relativ gross dimensioniert sein. Dies hat einen entsprechend grösseren Flächenbedarf und Leistungsverbrauch zur Folge, was sich besonders bei einer Systemstruktur mit mehreren Adressquellen auswirkt. Zudem besteht die Gefahr, dass Signale von mehreren Sendern überlappen, und dass damit hohe Stromspitzen entstehen.

Der Erfindung lag daher die Aufgabe zugrunde, bei einem Datenübertragunssystem der eingangs genannten Art die Schaltgeschwindigkeit zu erhöhen, und die Nachteile eines grossen Flächenbedarfs und Leistungsverbrauchs zu vermeiden.

Diese Aufgabe wird gemäss dem kennzeichnenden Teil des Anspruches 1 gelöst.

Die Erfindung hat den Vorteil, dass sowohl Steuerleitungen bzw. der Adressbus als auch der Datenbus in einem Zweiphasen-Taktsystem vorladbar sind. Die Aufladung erfolgt dabe in einer zeitunkritischen Phase. Ferner ist sichergestellt, dass innerhalb des Übertragungssystems keine Überlappungsgefahr von Adresssignalen besteht, die von mehreren Adressquellen erzeugt werden. Durch den Regelkreis wird dem Einschwingverhalten der Steuerleitung Rechnung getragen, so dass eine Mehrfachadressierung ausgeschlossen ist.

Weiterbildungen der Erfindung ergeben sich aus den abhängigen Ansprüchen.

Im folgenden wird die Erfindung anhand von zwei Ausführungsbeispielen weiter beschrieben.

Fig. 1 zeigt schematisch ein erstes Datenübertragungssystem

Fig. 2 zeigt Einzelheiten des ersten Datenübertragungssystems

Fig. 3 zeigt den zeitlichen Verlauf von Leitungspegeln aus Fig. 2

Fig. 4 zeigt schematisch ein zweites Datenübertragungssystem

Fig. 5 zeigt Einzelheiten des zweiten Datenübertragungssystems Fig. 6 zeigt den zeitlichen Verlauf von Leitungspegeln nach Fig. 5.

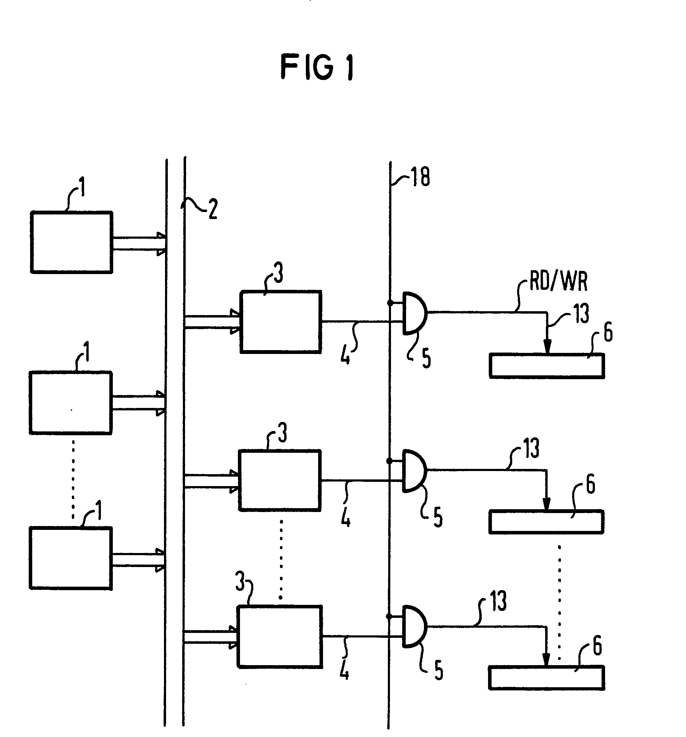

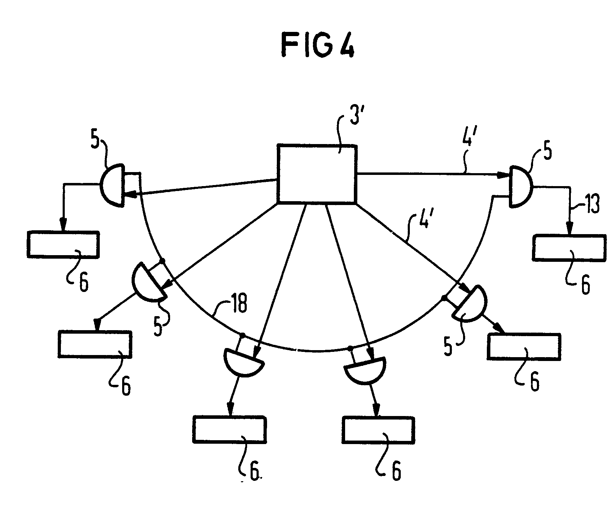

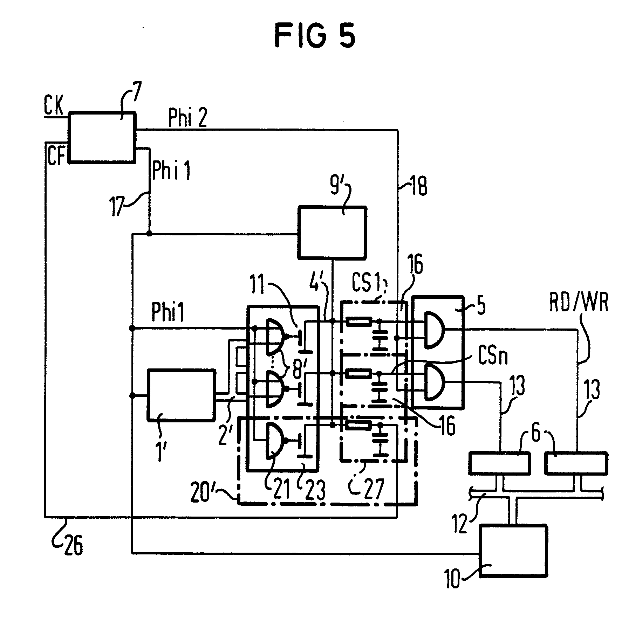

Wie anhand der Fig. 1–6 im folgenden beschrieben ist, sind Adress- und Datenbus 2, 12 unter streng synchroner Taktung mit Adress- bzw. Datensignalen beaufschlagbar. Dabei ist ein wesentliches Merkmal des Datenübertragungssystems, dass sowohl der Adressbus 2 als auch der Datenbus 12 in einer von zwei vorgegebenen Taktphasen Phi 1 Phi 2 vorgeladen werden.

Unter Vorladen wird dabei verstanden, dass die entsprechende Leitung in einem definierten Ausgangszustand mit einem log. Pegel 1 beaufschlagt wird, und dass anschliessend zum Erzeugen eines Datenmusters durch Entladen gegebenenfalls ein log. Pegel 0 herbeigeführt wird.

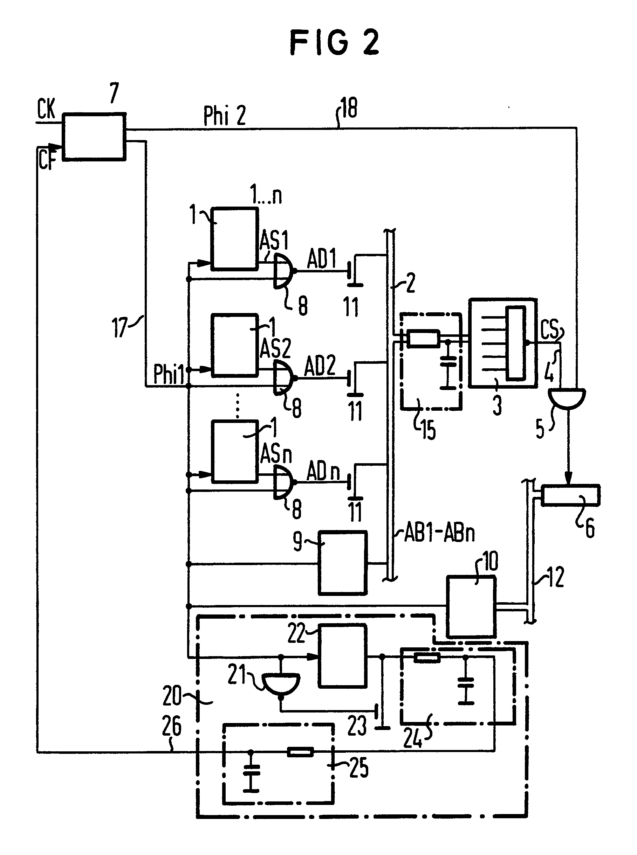

Das Übertragungssystem in Fig. 1 und 2 ist charakterisiert durch einen zentralen Adressbus 2 und durch dezentrale Adressenken 3. Diese Struktur kommt beispielsweise zur Anwendung, wenn mehrere Adressquellen 1 am Adressbus 2 liegen, oder wenn eine Adressquelle 1 von einer oder mehreren Gruppen von Adresssenken 3 entfernt ist. Der Adressbus weist aufgrund seiner Länge eine parasitäre Laufzeit $T_1$ auf, die durch ein erstes RC-Glied 15 schematisch dargestellt ist.

Die Adressenken 3 enthalten jeweils einen Dekoder, welcher ein Auswahlsignal CS an eine zugeordnete Formatierungsstufe 5 abgibt, wenn die entsprechende Sende/Empfangseinrichtung 6 adressiert ist. Alle Formatierungsstufen 5, die in den wiedergegebenen Beispielen aus einem UND-Glied bestehen, liegen eingangsseitig gemeinsam an einer Taktleitung 18 (zweite Taktleitung), welche mit einem Taktsignal (zweites Taktsignal Phi 2) beaufschlagbar ist. Auf diese Weise wird mit einer synchronen Taktung ein Steuersignal RD/WR auf einer Steuerleitung 13 an die zugeordnete Sende-Empfangseinrichtung 6 geschaltet. Abhängig vom Anwendungsfall dient das Steuersignal RD/WR dazu, Daten vom Datenbus 12 einzulesen oder Daten auf den Datenbus 12 auszulesen.

Wie Fig. 2 zeigt, ist zum Vorladen des Datenbusses 12 und des Adressbusses 2 eine erste bzw. zweite Vorladeeinrichtung 9, 10 vorgesehen. Die Aufladung erfolgt dabei zeitlich gesteuert über eine erste Taktleitung 17 mittels eines ersten Taktsignals Phi 1.

Das erste Taktsignal Phi 1 und das zweite, phasenverschobene, nicht mit dem ersten Taktsignal überlappende Taktsignal Phi 2 werden von einem Taktgenerator 7 von einem Eingangstakt Ck abgeleitet. Das zweite Taktsignal Phi 2 wird über eine zweite Taktleitung 18 an die Formatierungsstufen 5 geführt.

Der während der Dauer des ersten Taktsignals Phi 1 auf den logischen Pegel 1 vorgeladene Adressbus 2 wird anschliessend bis zum Beginn des zweiten Taktsignals Phi 2 von einer der Adressquellen 1 mit einer Adresse beaufschlagt. Die entsprechende Adresskombination wird dadurch erhalten, dass eine oder mehrere der Adressleitungen AB1 bis ABn durch ein Steuersignal AD1 bis ADn abhängig von einem Ausgangssignal AS1 bis ASn mittels ersten Entladevorrichtungen gegebenenfalls entladen werden. Diese Entladevorrichtungen bestehen beispielsweise aus MOS-FETs 11, deren gesteuerte Strecken mit Massepotential verbunden sind. Eine synchrone Anschaltung an den Adressbus 2 erfolgt über Sperrglieder 8, die in dem wiedergegebenen Beispiel aus NOR-Gliedern bestehen. Jeder Adressquelle 1 ist eine Sperrstufe 8 zugeordnet, die eingangsseitig mit der Adressquelle und mit der ersten Taktleitung 17 und ausgangsseitig mit dem zugeordneten MOS-FET 11 verbunden ist.

Bevor das Steuersignal RD/WR an die Sende-Empfangseinrichtung geschaltet wird, müssen alle Einschwingvorgänge, auf dem Adressbus und den nachfolgenden Stufen abgeklungen sein, um eine Mehrfachadressierung zu verhindern. Das Übergangssystem weist deshalb einen Regelkreis 20 auf, dessen Ausgangssignal über eine Kontrollleitung 26 auf einen Steuereingang des Taktgenerators 7 geführt ist. Der Regelkreis 20 stellt eine Nachbildung des Adress-Signalweges vom Ausgang der Adressquellen 1 bis zum Ausgang der Formatierungsstufen 5 dar.

Er besteht aus einer dritten Vorladeeinrichtung 22 und einer Laufzeitverzögerungseinheit, die aus einem zweiten und dritten RC-Glied 24, 25 besteht. Dabei entspricht die Zeitkonstante des zweiten RC-Gliedes 24 der Zeitkonstante $T_1$ des ersten RC-Gliedes 15 des Adressbusses 2, und die Zeitkonstante $T_2$ des dritten RC-Gliedes 25 entspricht mindestens der Verzögerungszeit $T_3$ der Adressenken 3.

Die erste, zweite und dritte Vorladeeinrichtung, bestehen vorzugsweise aus MOS-FETs, deren gesteuerte Strecken die vorzuladenden Leitungen mit einem Betriebspotential verbinden.

Für die Dauer des ersten Taktsignals Phi 1 wird die Verzögerungsleitung 26 ebenso wie der Adressbus 2 vorgeladen. Mit Ende des ersten Taktsignals Phi 1 wird die Verzögerungsleitung über eine zweite Entladevorrichtung 23 entladen, die aus einem MOS-FET besteht, dessen Steuereingang über einen Inverter 21 mit der ersten Taktleitung 17 verbunden ist. Der Pegelwechsel wird verzögert um die Laufzeiten $T_1$, $T_2$ auf den Taktgenerator 7 geführt. Dieses Kontrollsignal CF gibt den Beginn des zweiten Taktsignales Phi 2 und damit den Zugriff auf den Datenbus 12 frei. Um die Gültigkeit der Adresse auf den Adressbus 2 sicherzustellen, wird somit gegebenenfalls die Zeit zwischen der ersten und zweiten Taktphase Phi 1, Phi 2 verlängert.

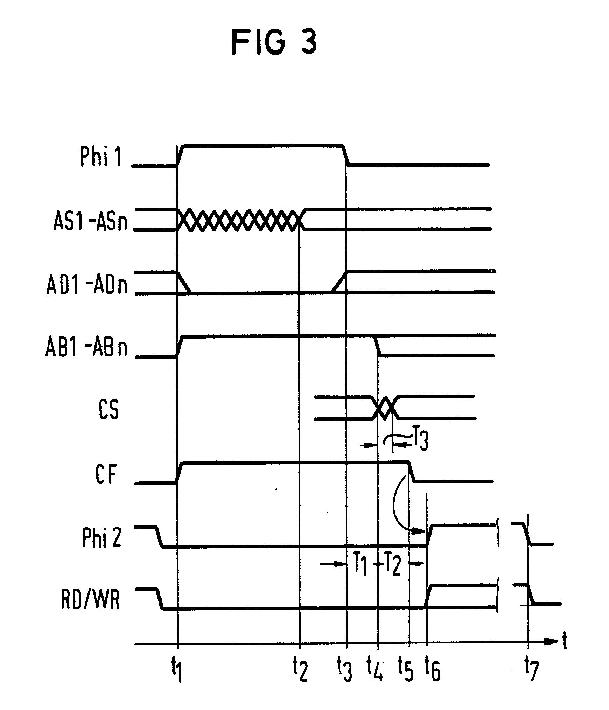

Zusammen mit Fig. 3 wird im folgenden die Funktion des ersten Übertragungssystems weiter beschrieben.

In Fig. 3 sind über der Zeitachse t die Verläufe des ersten Taktsignals Phi 1, der Ausgangssignale AS1 bis ASn der Steuersignale AD1 bis ADn für die MOS-FETs 11, der Adressbusleitungen AB1 bis ABn, des Auswahlsignals CF, des Kontrollsignals CF, des zweiten Taktsignals Phi 2 und des Steuersignals RD/WR aufgezeichnet. Ein Pegelwechsel zwischen einem der logischen Pegel 0 bzw. 1 findet gegebenenfalls zu einem der sieben aufeinanderfolgenden Zeitpunkte $t_1$ bis $t_7$ statt. Das erste Taktsignal Phi 1 ist zwischen den Zeitpunkten $t_1$ bis $t_3$ mit einem logischen Pegel 1 wirksam. Das zweite Taktsignal Phi 2 ist phasenverschoben zwischen den Zeitpunkten $t_6$ und $t_7$ mit dem logischen Pegel 1 wirksam, wobei durch eine Zeitverschiebung sichergestellt ist, dass sich beide Taktsignale nicht überlappen. Mit Beginn des ersten Taktsignals Phi 1 wird eine der Adressquellen 1 von einer nicht wiedergegebenen Ablaufsteuerung angesteuert. Das Ausgangssignal AS1 bis ASn der entsprechenden Adressquelle 1 schwingt bis zum

Zeitpunkt $t_2$ ein, bevor es einen definierten Pegel einnimmt. Abhängig von diesem undefinierten Zustand sind die zugeordneten Ausgangssignale AD1 bis ADn der Sperrstufe 8 spätestens zum Zeitpunkt $t_3$ eindeutig festgelegt, so dass eine Ansteuerung der MOS-FETs 11 wirksam ist. Die Entladung der Adressbusleitungen AB1 bis ABn, die von $t_1$ bis $t_3$ auf den Pegel 1 vorgeladen sind, wird wegen der parasitären Laufzeit $T_1$ erst zum Zeitpunkt $t_4$ wirksam. Zu dieser ersten Verzögerungszeit $T_1$ addiert sich eine zweite Verzögerungszeit $T_3$, die von der Adresssenke 3 abhängt. Die zweite Taktphase Phi 2, mit der das Steuersignal RD/WR an der Sende/Empfangseinrichtung 6 wirksam wird, darf erst beginnen, wenn das zugeordnete Steuersignal einen definierten Zustand eingenommen hat, um eine Mehrfachadressierung von Sende/Empfangseinrichtungen 6 zu verhindern. Deshalb sind im Regelkreis 20 neben der Laufzeitnachbildung des Adressbusses 2 durch das zweite RC-Glied 24 alle weiteren gegebenenfalls auftretenden Einschwingvorgänge durch die Laufzeit des dritten RC-Gliedes 25 berücksichtigt. Die Entladung der Kontrolleitung 26, ist mindestens bis zum Zeitpunkt $t_5$ verzögert, bis alle Einschwingvorgänge abgeklungen sind. Danach wird zum Zeitpunkt $t_6$ – ausgelöst durch den logischen Pegel 0 auf der Kontrolleitung 26 – über den Taktgenerator 7 das zweite Taktsignal Phi 2 gestartet. Das Anschalten der adressierten Sende/Empfangseinrichtung 6 auf den Datenbus mit Beginn der zweiten Taktphase Phi 2 erfolgt also sicher nach der Stabilisierung der Adressen.

Die Struktur des zweiten Datenübertragungssystems ist charakterisiert durch eine zentrale Adressenke 3' mit einem Adressdekoder, von welchem aus sich Auswahlleitungen 4' zu mehreren Sende/Empfangseinrichtungen 6 verteilen. Diese Struktur kann dann zur Anwendung kommen, wenn die Sende/Empfangseinrichtungen 6 beispielsweise sternförmig um die Adresssenke 3' verteilt sind. Wegen ihrer Länge sind in diesem Fall die Auswahlleitungen 4' mit einer unerwünschten langen Laufzeit behaftet, gegen welche die Laufzeit des relativ kurzen Adressbusses 2' vernachlässigbar ist.

Alle Auswahlleitungen 4' sind mit der ersten Vorladeeinrichtung 9' verbunden. Ebenso ist die Verzögerungsleitung des Regelkreises 20 mit der ersten Vorladeeinrichtung 9' verbunden. Zum Ausgleich der Signallaufzeiten $T_1$ der Auswahlleitungen 4', die von dem schematisch wiedergegebenen vierten RC-Glied 16 abhängen, weist die Verzögerungsleitung des Regelkreises 20 ein fünftes RC-Glied 27 auf, durch welches die Signallaufzeit im Regelkreis 20 zumindest um die Verzögerungszeit $T'_1$ verzögert wird.

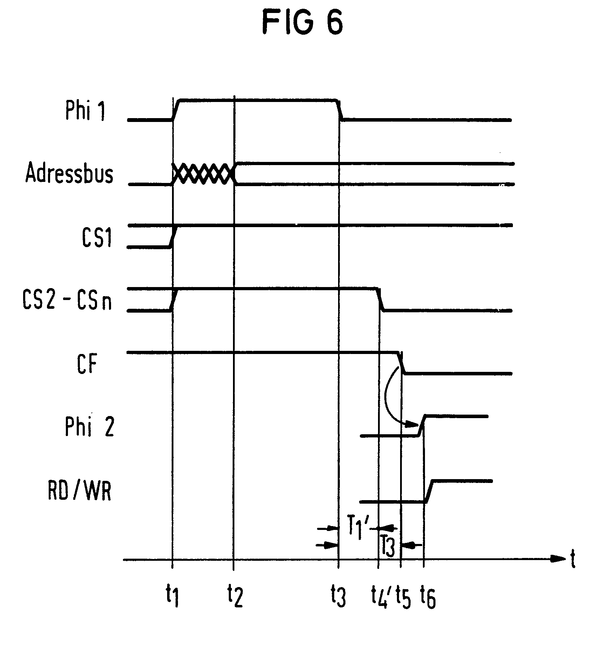

In den Signalverläufen der Fig. 6 ist das Beispiel wiedergegeben, dass eine Sende/Empfangseinrichtung 6 über ein erstes Auswahlsignal CS1 angewählt ist. Deshalb wird die entsprechende Auswahlleitung, die wie die anderen mit den Auswahlsignalen CS2 bis CSn beaufschlagbaren Auswahlleitungen während der Dauer des erstenTaktsignales Phi 1 mit dem logischen Pegel 1 vorgeladen ist, nicht über den zugeordneten MOS-FET 11 entladen. Die Auswahlleitungen mit den Auswahlsignalen CS2 bis CSn werden nach der Verzögerungszeit $T'_1$ zum Zeitpunkt $t_4$, auf den logischen Pegel 0 entladen. Abhängig von der gesamten Verzögerungszeit $T'_2$ des Regelkreises 20 nimmt das Kontrollsignal CF zum Zeitpunkt $t_5$ den logischen Pegel 0 ein. Dieser Wechsel bewirkt den Beginn des zweiten Taktsignales Phi 2.

**Patentansprüche**

1. Monolithisch integrierbares Übertragungssystem für Binärinformation, bestehend aus mindestens einer Adressquelle (1), die über einen Adressbus (2) mit mindestens einer Adresssenke (3, 3') verbunden ist, aus mindestens einer, jeweils einer Adresssenke (3, 3') zugeordneten, über jeweils eine Auswahlleitung (4, 4') aktivierbare und mit einem Datenbus (12) verbundene Sende/Empfangseinrichtung (6), aus einem Taktgenerator (7) zum Erzeugen von zwei phasenverschobenen, nicht überlappenden Taktsignalen (Phi 1, Phi 2), wobei im Verlauf eines ersten Taktsignals (Phi 1) eine erste Vorladeeinrichtung (10) zum Vorladen des Datenbusses (12) angesteuert ist, und wobei die Sende/Empfangseinrichtung (6) im Verlauf eines zweiten Taktsignals (Phi 2) adressiert ist, dadurch gekennzeichnet, dass ein Regelkreis (20) vorgesehen ist, mit dem das Signallaufzeitverhalten mindestens des Adressbusses (2) oder einer Auswahlleitung (4, 4') nachbildbar ist, dass im Verlauf des ersten Taktsignals (Phi 1) eine zweite Vorladeeinrichtung (9, 9') mit dem Adressbus (2) und/oder den Auswahlleitungen (4, 4') verbunden ist, dass mit Ende des ersten Taktsignals (Phi 1) der Adressbus (2) und/oder die Auswahlleitungen (4, 4') mit Adress- bzw. Auswahlsignalen beaufschlagbar sind und dass das zweite Taktsignal (Phi 2) mit Hilfe des Regelkreises (20) freigegeben wird, nachdem die Adress- bzw. Auswahlsignale stabil sind.

2. Übertragungssystem nach Anspruch 1, gekennzeichnet, durch eine Sperrschaltung (8) an jedem Ausgang der Adressquellen (1) zum Sperren eines Adresssignals (AS1–ASn) während der Dauer des ersten Taktsignals (Phi 1).

3. Übertragungssystem nach einem der Ansprüche 1 oder 2, gekennzeichnet durch eine dem Ausgang der Adresssenken (3, 3') nachgeschaltete Formatierungsstufe (5) zum Sperren eines Auswahlsignals (CS) während der Dauer des ersten Taktsignals (Phi 1).

4. Übertragungssystem nach einem der Ansprüche 2 oder 3, dadurch gekennzeichnet, dass die Sperrschaltung (8) aus einem NOR-Glied besteht, welches eingangsseitig mit der zugeordneten Adressquelle (1) und mit der Taktleitung (17) für das erste Taktsignal (Phi 1) verbunden ist.

5. Übertragungssystem nach einem der vorhergehenden Ansprüche, dadurch gekennzeichnet, dass der Beginn des zweiten Taktsignals (Phi 2) abhängig von einem Kontrollsignal (CF) des Regelkreises (20) mit Hilfe des Taktgenerators (7) beeinflussbar ist und der Regelkreis (20) eine Kontrolleitung (26) enthält, die mittels einer dritten Vorladeeinrichtung (22) im Verlauf des ersten Taktsignals (Phi 1) vorladbar ist, die mit mindestens einer Verzögerungseinheit (24, 25) in ihrem Laufzeitverhalten im Adressbus (2) bzw. einer Auswahlleitung (4, 4') nachgebildet ist, und die mit einer Entladevorrichtung (23) zum Entladen der Kontrolleitung (26) mit Ende des ersten Taktsignals (Phi 1) versehen ist.

## Claims

1. A monolithically integratable transmission system for binary information, consisting of at least one address source (1) which is connected via an address bus (2) to at least one address sink (3, 3'), of at least one transmit/receive device (6) which is assigned to an address sink (3, 3'), can be activated via a selection line (4, 4'), and is connected to a data bus (12) of a clock generator (7) which generates two phase-displaced, non-overlapping clock signals (Phi 1, Phi 2), where in the course of a first clock signal (Phi 1) a first precharging device (10) which precharges the data bus (12) is actuated, and where the transmit/receive device (6) is addressed in the course of a second clock signal (Phi 2), characterised in that a control loop (20) is provided with which the signal delay characteristics of at least the address bus (2) or a selection line (4, 4') can be simulated, that in the course of the first clock signal (Phi 1) a second precharging device (9, 9') is connected to the address bus (2) and/or the selection lines (4, 4'), that at the end of the first clock signal (Phi 1) the address bus (2) and/or the selection lines (4, 4') can be supplied with address and selection signals (AS1–ASn) during the first clock signal (Phi 1).

2. A transmission as claimed in Claim 1, characterised by a blocking circuit (8) at each output of the address sources (1) which blocks and address signal (AS1–ASn) during the first clock signal (Phi 1).

3. A transmission system as claimed in one of the Claims 1 or 2, characterised by a formatting stage (5) which is connected to the output of the address sinks (3, 3') and which serves to block a selection signal (CS) during the first clock signal (Phi 1).

4. A transmission system as claimed in one of the Claims 2 or 3, characterised in that the blocking circuit (8) consists of a NOR-gate which is connected at its input to the assigned address source (1) and to the clock line (17) for the first clock signal (Phi 1).

5. A transmission system as claimed in one of the preceding Claims, characterised in that the start of the second clock signal (Phi 2) can be influenced in dependence upon a control signal (CF) of the control loop (20) by means of the clock generator (7), and the control loop (20) includes a control line (26) which can be precharged by a third precharging device (22) in the course of the first clock signal (Phi 1), which is simulated with at least one delay unit (24, 25) in its delay time characteristics in the address bus (2) and/or a selection line (4, 4'), and which is provided with a discharging device (23) which discharges the control line (26) at the end of the first clock signal (Phi 1).

## Revendications

1. Système de transmission intégrable de façon monolithique pour une information binaire, constitué par au moins une source d'adresse (1), qui est reliée par l'intermédiaire d'un bus (2) de transmission d'adresses à au moins un collecteur d'adresses (3, 3'), par au moins un dispositif d'émission/réception (6) associé respectivement à un collecteur d'adresses (3, 3') et pouvant être activé par l'intermédiaire d'une ligne respective de sélection (4, 4') et relié à un bus (12) de transmission de données, par un générateur de cadence (7) servant à produire deux signaux de cadence (Phi 1, Phi 2) déphasés, sans chevauchement, et dans lequel pendant un premier signal de cadence (Phi 1) un premier dispositif de précharge (10) servant à précharger le bus (12) de transmission de données est commandé, et dans lequel le dispositif d'émission/réception (6) est adressé pendant un second signal de cadence (Phi 2), caractérisé par le fait qu'il est prévu un circuit de régulation (20), à l'aide duquel l'allure du temps de propagation des signaux au moins du bus (2) de transmission d'adresses ou d'une ligne de sélection (4, 4') peut être simulée, que pendant le second signal de cadence (Phi 1), un second dispositif de précharge (9, 9') est relié au bus (2) de transmission d'adresses et/ou aux lignes de sélection (4, 4'), qu'à la fin du premier signal de cadence (Phi 1), le bus (2) de transmission d'adresses et/ou les lignes de sélection (4, 4') peuvent être chargés par des signaux d'adresses ou par des signaux de sélection, et que le second signal de cadence (Phi 2) est libéré à l'aide du circuit de régulation (20) une fois que les signaux d'adresses ou les signaux de sélection sont stables.

2. Système de transmission suivant la revendication 1, caractérisé par un circuit de blocage (8) raccordé à chaque sortie des sources d'adresses (1) de manière à bloquer un signal d'adresses (AS1–ASn) pendant la durée du premier signal de cadence (Phi 1).

3. Système de transmission suivant l'une des revendications 2 ou 3, caractérisé par le fait que le circuit de blocage (8) est constitué par un circuit NON-OU, qui est raccordé, côté entrée, à la source associée d'adresses (1) et à la ligne (17) de transmission du premier signal de cadence (Phi 1).

5. Système de transmission suivant l'une des revendications précédentes, caractérisé par le fait que le début du second signal de cadence (Phi 2) peut être influencé à l'aide du générateur de cadence (7), en fonction d'un signal de commande (CF) du circuit de régulation (20), et ce circuit de régulation (20) comporte une ligne de commande (26), qui peut être préchargée, pendant le premier signal de cadence (Phi 1), au moyen d'un troisième dispositif de précharge (22), et dans laquelle l'allure du temps de transit dans le bus (2) de transmission d'adresses ou dans une ligne de sélection (4, 4′) est simulée à l'aide d'au moins une unité de retardement (24, 25), et qui est équipée d'un dispositif de décharge (23) servant à décharger la ligne de commande (26) à la fin du premier signal de cadence (Phi 1).

# FIG 1

RD/WR

FIG 2

# FIG 3

# FIG 4

# FIG 5

# FIG 6